# EUROPÄISCHE PATENTSCHRIFT

(11) **EP 3 515 733 B1**
(45) Veröffentlichungstag und Bekanntmachung des Hinweises auf die Patenterteilung: **27.05.2020**
(21) Anmeldenummer: 17783765.5
(22) Anmeldetag: 26.09.2017
(51) Int. Cl.: B60H 1/00, F25B 30/02

(54) **KLIMATISIERUNGSVORRICHTUNG FÜR EIN KRAFTFAHRZEUG UND VERFAHREN ZU DEREN BETRIEB**
AIR-CONDITIONING DEVICE FOR A MOTOR VEHICLE AND METHOD FOR THE OPERATION THEREOF
DISPOSITIF DE CLIMATISATION POUR VÉHICULE AUTOMOBILE ET PROCÉDÉ PERMETTANT DE FAIRE FONCTIONNER LEDIT DISPOSITIF

(30) Priorität: 26.09.2016 DE 102016218484
(43) Veröffentlichungstag der Anmeldung: 31.07.2019
(73) Patentinhaber: Volkswagen Aktiengesellschaft, 38440 Wolfsburg (DE)
(72) Erfinder: HOMANN, Gregor, 38442 Wolfsburg (DE); SCHMITT, Stefan, 38458 Velpke (DE)
(86) Internationale Anmeldenummer: PCT/EP2017/074326
(87) Internationale Veröffentlichungsnummer: WO 2018/055188

(56) Entgegenhaltungen:
- WO-A1-2013/084462
- WO-A1-2013/084465
- DE-A1-102011 057 059
- DE-A1-102011 109 055

## Beschreibung

Die Erfindung bezieht sich auf eine Klimatisierungsvorrichtung für ein Kraftfahrzeug, umfassend
- einen Kältemittelkreis mit
   ∘ einem Kompressor zum Verdichten von Kältemittel,
   ∘ einem dem Kompressor in Kältemittel-Strömungsrichtung nachgeschalteten, als Luft-Kältemittel-Wärmeübertrager ausgebildeten und als Kondensator betreibbaren, ersten Innenwärmeübertrager und
   ∘ einem dem ersten Innenwärmeübertrager in Kältemittel-Strömungsrichtung über ein Expansionsventil nachgeschalteten, als Luft-Kältemittel-Wärmeübertrager ausgebildeten und als Verdampfer betreibbaren, zweiten Innenwärmeübertrager sowie
- einen Kühlmittelkreis mit
   ∘ einer Kühlmittelpumpe und
   ∘ einem thermisch mit elektrischen Antriebskomponenten des Kraftfahrzeugs gekoppelten Chiller,
wobei der Kühlmittelkreis und der Kältemittelkreis über einen als Kühlmittel/Kältemittel-Wärmeübertrager ausgebildeten Koppelwärmeübertrager thermisch miteinander gekoppelt sind und die aus dem Kühlmittelkreis und dem Kältemittelkreis bestehende Kreisanordnung einen thermisch mit der Umgebungsluft des Kraftfahrzeugs gekoppelten, vom Koppelwärmeübertrager verschiedenen Außenwärmeübertrager aufweist,
wobei der Außenwärmeübertrager als ein in den Kühlmittelkreis integrierter Luft/Kühlmittel-Wärmeübertrager ausgebildet ist,
wobei der Kühlmittelkreis (200) zwei Kühlmittelteilkreise (210, 220) aufweist, nämlich einen ersten Kühlmittelteilkreis (210), umfassend eine erste Kühlmittelpumpe (211), den Außenwärmeübertrager (213) und den kühlmittelseitigen Teil des Koppelwärmeübertragers (130), und einen zweiten Kühlmittelteilkreis (220), umfassend eine zweite Kühlmittelpumpe (221) und den Chiller (222),
und wobei der Kühlmittelkreis (200) Schaltmittel (230) aufweist, mittels derer - in einer ersten Schaltstellung - die Kühlmittelteilkreise (210, 220) voneinander trennbar sind.

Die Erfindung bezieht sich weiter auf verschiedene Verfahren zum Betrieb einer derartigen Klimatisierungsvorrichtung.

Gattungsgemäße Klimatisierungsvorrichtungen sind bekannt aus der WO 2013/084465 A1.

Aus der DE 10 2011 109 055 A1 ist eine Klimatisierungsvorrichtung für ein Kraftfahrzeug bekannt, deren Kältemittelkreis sowohl in einem Wärmepumpenmodus als auch in einem Kühlmodus betreibbar ist. Wie bei Kältemittelkreisen üblich, umfasst dieser einen Kompressor zur Verdichtung des Kältemittels. Dem Kompressor kältemittelseitig nachgeschaltet ist eine Innenwärmeübertrager-Anordnung mit zwei kältemittelseitig hintereinandergeschalteten Luft/Kältemittel-Wärmeübertragern, von denen der kältemitteleingangsseitige (erste) in allen Betriebsmoden stets als Kondensator betrieben wird und deren kältemittelausgangsseitiger (zweiter) bedarfsweise entweder als Kondensator oder als Verdampfer betrieben werden kann. Der Begriff des Kondensators ist hier weit zu verstehen und umfasst auch solche Vorrichtungen, die in Kältemittelkreisen mit nichtkondensierbarem Kältemittel, wie z.B. CO₂, als Gaskühler wirken. Analoges gilt für die Begriffe, "kondensieren", "Verdampfer" und "verdampfen". Die Innenwärmeübertrager sind von einem Luftstrom durchströmbar, der über Verteilkanäle in den Innenraum des Kraftfahrzeugs geleitet werden kann. Zwischen den beiden Innenwärmeübertragern, die auf unterschiedlichen, schaltbaren Verbindungspfaden miteinander verbunden sind, ist in jedem der Verbindungspfade ein Expansionsventil angeordnet, mittels dessen das Kältemittel hinter dem ersten und vor dem zweiten Innenwärmeübertrager entspannt werden kann.

Weiter umfasst der bekannte Kältemittelkreis einen Außenwärmeübertrager, der als Luft/Kältemittel-Wärmeübertrager ausgebildet ist und den Kältekreis thermisch mit der Außenluft koppelt. Der Außenwärmeübertrager ist Bestandteil beider Verbindungspfade zwischen den Innenwärmeübertragern, ist jedoch im ersten Verbindungspfad dem zweiten Innenwärmeübertrager vor- und im zweiten Verbindungspfad nachgeschaltet.

Im Wärmepumpenmodus durchströmt das komprimierte Kältemittel zunächst den stets als Kondensator betriebenen, ersten Innenwärmeübertrager, wo es Wärme an den diesen durchströmenden Luftstrom abgibt. Im Anschluss durchströmt das abgekühlte Kältemittel das erste Expansionsventil, wobei ein Druckabfall eingestellt werden kann, falls der nachgeschaltete, zweite Innenwärmeübertrager auf einem niedrigeren Temperaturniveau betrieben werden soll. Der zweite Innenwärmeübertrager wird jedoch auch als weiterer Kondensator genutzt, in dem das Kältemittel Wärme an den ihn durchströmenden Luftstrom abgibt, der somit bei der Passage durch die beiden Innenwärmeübertrager eine doppelte Aufheizung erfährt. Im Anschluss erfolgt eine deutliche Entspannung des Kältemittels mittels des zweiten Expansionsventils, sodass der Außenwärmeübertrager als Verdampfer betrieben werden und Wärme aus der ihn durchströmenden Umgebungsluft aufnehmen kann. Im Anschluss gelangt das Kältemittel zurück in den Kompressor.

Im Kühlmodus strömt das komprimierte Kältemittel vom Kompressor ebenfalls zunächst durch den stets als Kondensator genutzten, ersten Innenwärmeübertrager, wo es Wärme an den diesen durchströmenden Luftstrom abgibt. Da dieser jedoch in die Fahrgastzelle geleitet wird und im Kühlmodus gerade keine wesentliche Erwärmung gewünscht ist, kann der wesentliche Anteil des Luftstroms mittels einer Bypassklappe, die häufig auch als Temperaturmischklappe bezeichnet wird, um den ersten Innenwärmeübertrager herumgeführt werden. Hierdurch verringert sich allerdings die Effizienz der Kondensation bzw. Gaskühlung im ersten Innenwärmeübertrager. Im Kühlmodus ist das erste Expansionsventil geschlossen, sodass das Kältemittel vom Ausgang des ersten Innenwärmeübertragers direkt zum Außenwärmeübertrager strömt, der in diesem Modus als der eigentliche Kondensator wirkt und Wärme an die ihn durchströmende Außenluft abgibt. Man beachte, dass der Außenwärmeübertrager im Kühlmodus in umgekehrter Richtung von dem Kältemittel durchströmt wird im Vergleich zu dem zuvor beschriebenen Wärmepumpenmodus. Hinter dem Außenwärmeübertrager strömt das Kältemittel durch das zweite Expansionsventil zum zweiten Innenwärmeübertrager, der im Kühlmodus als Verdampfer betrieben wird. Die hierzu notwendige Entspannung des Kältemittels erfolgt im zweiten Expansionsventil. Vom Verdampfer gelangt das Kältemittel dann zurück zum Kompressor.

Die genannte Druckschrift offenbart zusätzlich einen Kühlmittelkreis zur Kühlung von elektrischen Antriebskomponenten des Kraftfahrzeugs, insbesondere einer elektrischen Traktionsmaschine und der zugeordneten elektrischen Energiespeicher sowie der zugeordneten Leistungselektronik über einen Chiller. Der Begriff des Chillers ist grundsätzlich weit zu verstehen und kann auch eine Mehrzahl von hintereinander geschalteten Wärmeübertragern umfassen. Der Kühlmittelkreis ist über einen als Kühlmittel/Kältemittel-Wärmeübertrager ausgebildeten Koppelwärmeübertrager mit dem Kältemittelkreis gekoppelt. Der Koppelwärmeübertrager ist an einer Stelle in den Kältemittelkreis integriert, die in jedem Betriebsmodus, d.h. in jedem Verbindungspfad, hinter dem als Verdampfer betriebenen Element liegt und mit diesem über ein mittels eines schaltbaren Bypasses umgehbares Expansionsventil verbunden ist. Daher kann der Koppelwärmeübertrager bedarfsweise als weiterer Verdampfer betrieben werden.

Nachteilig bei der bekannten Klimatisierungsvorrichtung ist, dass sie keine Möglichkeit einer Erwärmung der elektrischen Antriebskomponenten vorsieht, die zur Vermeidung von Kondenswasser insbesondere dann günstig sein kann, wenn der elektrische Antrieb bei Temperaturen unterhalb der Umgebungstemperatur angefahren wird. Zudem macht der Einsatz eines weiteren Expansionsventils und der Bypass-Schaltung sowohl den Aufbau als auch die Regelung des Kältemittelkreises aufwendig und teuer.

Die DE 10 2011 057 059 A1 offenbart eine Klimatisierungsvorrichtung für ein Kraftfahrzeug mit einem Kältemittelkreis und einem Kühlmittelkreis, die über einen als Kühlmittel/Kältemittel-Wärmeübertrager ausgebildeten Koppelwärmeübertrager thermisch miteinander gekoppelt sind. Ferner weist der Kühlmittelkreis eine Pumpe, Chiller und einen Außenwärmeübertrager zur thermischen Kopplung mit der Umgebung auf. Mittels eines Ventils kann das Kühlmittel so durch den Kühlmittelkreis geleitet werden, dass es den Außenwärmeübertrager umgeht und stattdessen durch einen Bypass geleitet wird.

Aus der WO 2013/084462 A1 wiederum ist eine Klimatisierungsvorrichtung für ein Kraftfahrzeug mit einem Kältemittelkreis und einem Kühlmittelkreis bekannt, die über einen Koppelwärmeübertrager thermisch miteinander gekoppelt sind, der zugleich als Außenwärmeübertrager fungiert. Zudem umfasst der Kühlmittelkreis eine Pumpe und einen Chiller. Hier kann das Kühlmittel mittels eines Ventils so durch den Kühlmittelkreis geleitet werden, dass es den Koppel-/Außenwärmeübertrager umgeht und stattdessen durch einen Bypass geleitet wird.

Die gattungsgemäße WO 2013/084465 A1 offenbart eine Klimatisierungsvorrichtung für ein Kraftfahrzeug mit einem Kältemittelkreis und einem Kühlmittelkreis, die über einen als Kühlmittel/Kältemittel-Wärmeübertrager ausgebildeten Koppelwärmeübertrager thermisch miteinander gekoppelt sind. Der Kühlmittelkreis weist zwei Kühlmittelteilkreise auf, wobei der erste Kühlmittelteilkreis von einem ersten und der zweite Kühlmittelteilkreis von einem zweiten Kühlmittel durchströmt wird. Der erste Kühlmittelteilkreis umfasst den Koppelwärmeübertrager, ein Ventil, eine Pumpe und einen Koppel-/Außenwärmeübertrager, über den der erste und der zweite Kühlmittelteilkreis sowie die Umgebungsluft thermisch miteinander gekoppelt sind. Der zweite Kühlmittelteilkreis umfasst zusätzlich zum Koppel-/ Außenwärmeübertrager einen Chiller, eine Pumpe sowie ein Ventil. Zwar sind die Kühlmittelteilkreise mittels der Ventile voneinander trennbar und so miteinander miteinander verbindbar, dass die beiden Kühlmittel sich stofflich und thermisch durchmischen.

Nachteilig bei der bekannten Vorrichtung ist aber, dass, wenn die beiden Kühlmittelteilkreise miteinander verbunden sind, die Beschickung der einzelnen Kühlmittelteilkreise mit Kühlmittel von den Strömungswiderständen der in den einzelnen Kühlmittelteilkreisen angeordneten Fahrzeugkomponenten sowie den Leistungsdaten, mit denen die beiden Pumpen betrieben werden, abhängt. Dadurch ist die Kühlmittelmenge, die durch die einzelnen Kühlmittelteilkreise strömt, nicht oder nur schwierig einstellbar und folglich die Effizienz des Wärmeabtransports von bzw. des Wärmetransports zu den einzelnen Fahrzeugkomponenten herabgesetzt.

Es ist die Aufgabe der vorliegenden Erfindung, eine gattungsgemäße Klimatisierungsvorrichtung effizienter zu gestalten, sodass sie einen vorhersehbaren Wärmeabtransport von bzw. Wärmetransport zu den einzelnen Fahrzeugkomponenten ermöglicht.

Diese Aufgabe wird in Verbindung mit den Merkmalen des Oberbegriffs von Anspruch 1 dadurch gelöst, dass die Kühlmittelteilkreise mittels der Schaltmittel - in einer zweiten Schaltstellung - derart miteinander verbindbar sind, dass der kühlmittelseitige Teil des Koppelwärmeübertragers, der Außenwärmeübertrager und der Chiller hintereinander von dem Kühlmittel durchströmt werden.

Vorteilhafte Ausführungsformen der Erfindung und bevorzugte Betriebsverfahren sind Gegenstand der abhängigen Ansprüche.

Bei der Erfindung besteht keine direkte thermische Kopplung des Kältemittelkreises mit der Umgebung. Stattdessen ist eine lediglich indirekte thermische Kopplung über den Kühlmittelkreis realisiert. Der Kühlmittelkreis, dessen Effizienz durch die Steuerung der Kühlmittelpumpe(n) bedarfsgerecht variiert werden kann, dient somit als Puffer zwischen der Umgebung und dem Kältemittelkreis. Zudem kann der Kühlmittelkreis - zumindest bei bevorzugten Ausführungsformen, wie nachfolgend beschrieben - bedarfsgerecht erwärmend oder kühlend betrieben werden, ohne dass hierfür zusätzliche Elemente, insbesondere kein zusätzliches Expansionsventil erforderlich wäre. Schließlich erlaubt die Entkopplung des Kältemittelkreises von der Umgebung einen "sanfteren" und für den Benutzer des Fahrzeugs kaum wahrnehmbaren Übergang vom Kühl- zum Wärmepumpenbetrieb des Kältemittelkreises.

Dies soll nachfolgend anhand der bevorzugten Betriebsmoden der erfindungsgemäßen Klimatisierungsvorrichtung erläutert werden. Hinsichtlich des grundlegenden Kühlbetriebs bzw. des grundlegenden Wärmepumpenbetriebs unterscheidet sich der Betrieb des Kältemittelkreises nicht von demjenigen des Kältemittelkreises der aus der DE 10 2011 109 055 A1 bekannten Klimatisierungsvorrichtung. Insoweit kann auf das oben Gesagte verwiesen werden.

Die Erfindung betrifft somit gemäß Anspruch 5 ein Verfahren zum Betrieb einer erfindungsgemäßen Klimatisierungsvorrichtung, wobei der Kältemittelkreis in einem Kühlbetrieb betrieben wird, bei dem im Kompressor verdichtetes Kältemittel zunächst den als Kondensator betriebenen, ersten Innenwärmeübertrager passiert, sodann den als weiteren Kondensator betriebenen Koppelwärmeübertrager passiert, anschließend im ersten Expansionsventil entspannt wird, sodann im als Verdampfer betriebenen, zweiten Innenwärmeübertrager verdampft wird und abschließend zum Kompressor zurückströmt.

Als ein weiteres grundsätzliches Betriebsverfahren betrifft die Erfindung gemäß Anspruch 6 ein Verfahren zum Betrieb einer erfindungsgemäßen Klimatisierungsvorrichtung, wobei der Kältemittelkreis in einem Wärmepumpenbetrieb betrieben wird, bei dem im Kompressor verdichtetes Kältemittel zunächst den als Kondensator betriebenen, ersten Wärmeübertrager passiert, sodann das zweite Expansionsventil durchströmt und den als weiteren Kondensator betriebenen, zweiten Innenwärmeübertrager passiert, anschließend im ersten Expansionsventil entspannt wird, sodann im als Verdampfer betriebenen Koppelwärmeübertrager verdampft wird und abschließend zum Kompressor zurückströmt.

Im Kühlbetrieb des Kältemittelkreises wird in dem als weiterer Kondensator betriebenen Koppelwärmeübertrager Kondensationswärme aus dem Kältemittelkreis in den Kühlmittelkreis übertragen und kann über den Chiller zur Vorwärmung der elektrischen Antriebskomponenten, einer Leistungselektronik oder anderer elektrischer Verbraucher genutzt werden. Hierdurch wird zum einen die Bildung von Kondenswasser in den empfindlichen elektrischen Antriebskomponenten, der Leistungselektronik oder den gegebenenfalls anderen elektrischen Verbrauchen verhindert; zum anderen führt die Vorheizung der häufig mit einer Getriebeeinheit verbundenen Antriebseinheit zu einer effizienteren Funktionsweise, was zu einer Reichweitensteigerung im elektrischen Fahrbetrieb führt. Bei längerem Betrieb der elektrischen Antriebskomponenten kann deren Abwärme über den Außenwärmeübertrager abgeführt werden. Durch geeignete Steuerung der Kühlmittelpumpe ist dies möglich, ohne die Wärmeaufnahme aus dem Kältemittelkreis wesentlich zu reduzieren.

Im Wärmepumpenbetrieb des Kältemittelkreises hingegen kann die Abwärme der elektrischen Antriebskomponenten über den als Verdampfer betriebenen Koppelwärmeübertrager in den Kältemittelkreis eingespeist werden, was dessen Wärmepumpeneffizienz erhöht. Bei geeigneter Temperatursteuerung des Koppelwärmeübertragers kann zusätzlich über den Außenwärmeübertrager Wärme aus der Umgebung zunächst in den Kühl- und dann über den Koppelwärmeübertrager in den Kältemittelkreis übertragen werden.

Der Fachmann wird verstehen, dass sich sowohl im Kühl- als auch im Wärmepumpenbetrieb des Kältemittelkreises je nach herrschenden Außentemperaturen und Zustand der elektrischen Antriebskomponenten (Wärmezu- oder -abfuhr gewünscht) unterschiedliche Anforderungen an die Gesamtvorrichtung stellen, die durch Regelung des Kältemittelkreises allein nicht vollständig zu erfüllen sind. Daher ist vorgesehen, dass der Kühlmittelkreis zwei Kühlmittelteilkreise aufweist, nämlich einen ersten Kühlmittelteilkreis, umfassend eine erste Kühlmittelpumpe, den Außenwärmeübertrager und den kühlmittelseitigen Teil des Koppelwärmeübertragers, und einen zweiten Kühlmittelteilkreis, umfassend eine zweite Kühlmittelpumpe und den Chiller. Weiter weist der Kühlmittelkreis Schaltmittel auf, mittels derer - in einer ersten Schaltstellung - die Kühlmittelteilkreise voneinander trennbar und - in einer zweiten Schaltstellung - miteinander verbindbar sind. Die Schaltmittel dienen also einer Trennung bzw. Verbindung der Kühlmittelteilkreise. In der hier als erste Schaltstellung bezeichneten Schaltstellung der Schaltmittel sind die Kühlmittelteilkreise voneinander getrennt, wohingegen sie in der hier als zweite Schaltstellung bezeichneten Schaltstellung der Schaltmittel miteinander verbindunden sind. Die Schaltmittel sind dabei bevorzugt so ausgelegt, dass die Verbindung der Kühlmittelteilkreise unter Umgehung einer der Kühlmittelpumpen erfolgt. Bei verbundenen Teilkreisen genügt nämlich die Umwälzung des Kühlmittels durch nur eine Kühlmittelpumpe. Lediglich im Fall getrennter Kühlmittelteilkreise ist in jedem Kühlmittelteilkreis eine aktive Kühlmittelpumpe zur Umwälzung erforderlich.

Werden, bei Betrieb des Kältemittelkreises im Kühlbetrieb, die Schaltmittel des Kühlmittelkreises in ihrer zweiten Schaltstellung, d.h. mit verbundenen Kühlmittelteilkreisen, betrieben, wird über den Koppelwärmeübertrager Kondensationswärme vom Kältemittelkreis an den Kühlmittelkreis abgegeben und kann zur Vorwärmung der elektrischen Antriebskomponenten über den Chiller genutzt werden. Zwar erfährt der Kühlmittelkreis über den Außenwärmeübertrager eine Abkühlung; die resultierende Kühlmitteltemperatur im Bereich der elektrischen Antriebskomponenten ist jedoch höher als dies ohne den Wärmeeintrag aus dem Kältemittelkreis der Fall wäre.

Ist eine Temperierung der elektrischen Antriebskomponenten nicht erforderlich, können die Schaltmittel in ihre erste Schaltstellung umgeschaltet, d.h. die Kühlmittelteilkreise voneinander getrennt werden. Der den Außenwärmeübertrager und den kühlmittelseitigen Teil des Koppelwärmeübertragers umfassende, erste Kühlmittelteilkreis erfährt dann kein Wärmeaufnahme von den elektrischen Antriebskomponenten. Er nimmt allein Wärme vom Koppelwärmeübertrager auf und gibt diese über den Außenwärmeübertrager an die Umgebung ab, wodurch die Effizienz des Kühlbetriebs des Kältemittelkreises gesteigert wird. Der zweite Kühlmittelteilkreis kann in diesem Modus einer Vergleichmäßigung der Temperatur der unterschiedlichen elektrischen Antriebskomponenten dienen.

Werden, bei Betrieb des Kältemittelkreises im Wärmepumpenbetrieb, die Schaltmittel des Kühlmittelkreises in ihrer zweiten Schaltstellung, d.h. mit verbundenen Kühlmittelteilkreisen, betrieben, geht Wärme vom Kühlmittelkreis über den Koppelwärmeübertrager in den Kältemittelkreis über und dient hier der Effizienzsteigerung des Wärmepumpenbetriebs. Diese Wärme stammt zum einen aus der Abwärme der elektrischen Antriebskomponenten, die über den Chiller in den Kühlmittelkreis eingetragen wird. Zum anderen kann sie aus der Umgebung stammen, die über den Außenwärmeübertrager thermisch mit dem Kühlmittelkreis gekoppelt ist. Die Wärmeabgabe vom Kühlmittelkreis zum Kältemittelkreis steigert zudem die Effizienz der Kühlung der elektrischen Antriebskomponenten.

Der Betrieb des Kältemittelkreises im Wärmepumpenmodus erfolgt vor allem bei kalten Außentemperaturen. In solchen Situationen kann eine Kühlung der elektrischen Antriebskomponenten unerwünscht sein. Daher kann es sinnvoll sein, insbesondere in solchen Situationen die Schaltmittel des Kühlmittelkreises in ihre erste Schaltstellung zu überführen und die Kühlmittelteilkreise dadurch zu trennen. Der zweite Kühlmittelkreis dient hier einer Vergleichmäßigung der Temperatur zwischen unterschiedlichen elektrischen Antriebskomponenten. Der erste Kühlmittelteilkreis hingegen kann genutzt werden, um über den Außenwärmeübertrager Wärme aus der Umgebung aufzunehmen und über den Koppelwärmeübertrager in den Kältemittelkreis einzuleiten.

Weitere Merkmale und Vorteile der Erfindung ergeben sich aus der nachfolgenden, speziellen Beschreibung und den Zeichnungen.

Es zeigen:
- Figur 1: eine Ausführungsform einer erfindungsgemäßen Klimatisierungsvorrichtung,
- Figur 2: die Klimatisierungsvorrichtung von Figur 1 im Kühlbetrieb ihres Kältemittelkreises und mit verbundenen Kühlmittelteilkreisen,
- Figur 3: die Klimatisierungsvorrichtung von Figur 1 im Kühlbetrieb ihres Kältemittelkreises und mit getrennten Kühlmittelteilkreisen,
- Figur 4: die Klimatisierungsvorrichtung von Figur 1 im Wärmepumpenbetrieb ihres Kältemittelkreises mit verbundenen Kühlmittelteilkreisen und
- Figur 5: die Klimatisierungsvorrichtung von Figur 1 im Wärmepumpenbetrieb ihres Kältemittelkreises mit getrennten Kühlmittelteilkreisen.

Gleiche Bezugszeichen in den Figuren deuten auf gleiche oder analoge Elemente hin.

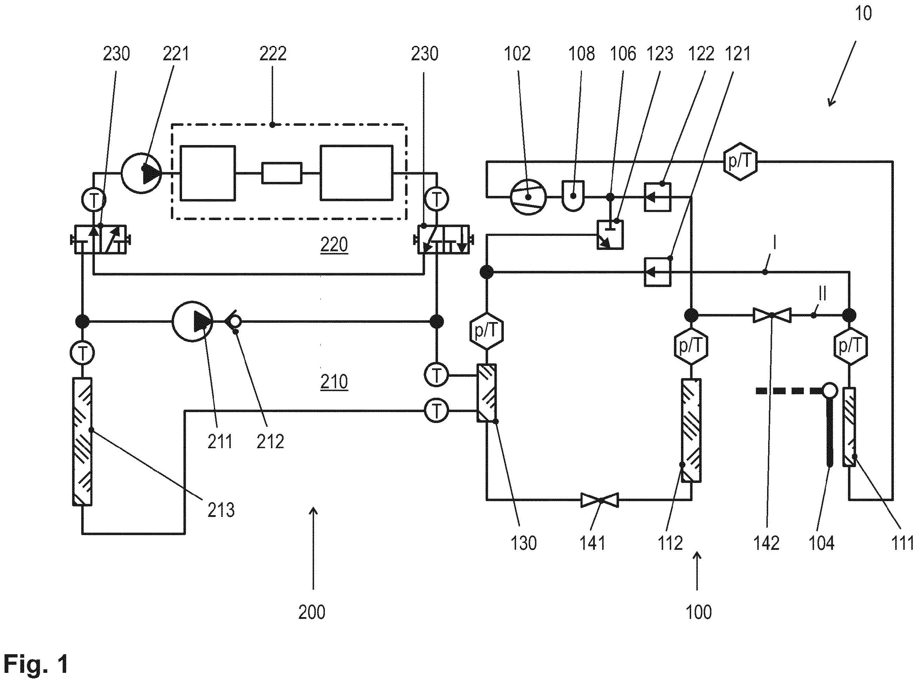

Figur 1 zeigt in schematisierter Darstellung eine Ausführungsform einer erfindungsgemäßen Klimatisierungsvorrichtung 10. Die Klimatisierungsvorrichtung 10 umfasst einen Kältemittelkreis 100 und einen Kühlmittelkreis 200. Der Kältemittelkreis 100 umfasst einen Kompressor 102 zur Verdichtung von Kältemittel. Dieses strömt in jedem Betriebsmodus verdichtet und dadurch erhitzt zu einem als Luft/Kältemittel-Wärmeübertrager ausgebildeten, ersten Innenwärmeübertrager 111. Ein Luftstrom durch den ersten Innenwärmeübertrager 111 in die Fahrgastzelle ist mittels einer Luftleitklappe 104 regulierbar.

Ein ebenfalls als Luft/Kältemittel-Wärmeübertrager ausgebildeter, zweiter Innenwärmeübertrager 112 ist dem ersten Innenwärmeübertrager 111 luftseitig vor- und kältemittelseitig nachgeschaltet. Dabei sind der erste Innenwärmeübertrager 111 und der zweite Innenwärmeübertrager 112 auf zwei unterschiedlichen Verbindungspfaden kältemittelseitig verbunden. Ein erster Verbindungspfad I läuft über ein ersten Schaltventil 121 zu einem als Kühlmittel/Kältemittel-Wärmeübertrager ausgebildeten Koppelwärmeübertrager 130 und von diesem über ein ersten Expansionsventil 141 zum zweiten Innenwärmeübertrager 112. Auf einem zweiten Verbindungspfad II strömt das Kältemittel vom ersten Innenwärmeübertrager 111 über ein zweites Expansionsventil 142 direkt zum zweiten Innenwärmeübertrager 112, der dabei in umgekehrter Richtung durchströmt wird. Hinter dem zweiten Innenwärmeübertrager 112 kann das Kältemittel durch das erste Expansionsventil 141 zum Koppelwärmeübertrager 130 strömen.

Sowohl der erste Verbindungspfad I als auch der zweite Verbindungspfand II münden in einer gemeinsamen Mündungsstelle 106, von wo aus das Kältemittel bei der dargestellten Ausführungsform über einen Sammler 108 zurück zum Kompressor 102 strömen kann. Die Wahl, welcher der beiden Verbindungspfade I, II durchströmt wird, kann mithilfe des ersten Schaltventils 121, sowie eines zweiten Schaltventils 122 und eines dritten Schaltventils 123, die jeweils am Ende der Verbindungspfade I, II unmittelbar vor dem Mündungspunkt 106 angeordnet sind, getroffen werden. Der Fachmann wird erkennen, dass anstelle der drei einzelnen Schaltventile 221, 222, 223 auch eine komplexere Ventilanordnung Einsatz finden kann.

Zur Regelung des Kältemittelkreises sind weiter mehrere Messstellen vorgesehen, die in Figur 1 mit "p/T" gekennzeichnet sind, um anzudeuten, dass hier vorzugsweise Druck und/oder Temperatur des Kältemittels gemessen und zur Weiterverarbeitung der Daten an eine nicht dargestellte Steuereinheit gesendet werden.

Der Kühlmittelkreis 200 umfasst zwei Kühlmittelteilkreise, nämlich einen ersten Kühlmittelteilkreis 210 und einen zweiten Kühlmittelteilkreis 220. Der erste Kühlmittelteilkreis 210 umfasst eine erste Kühlmittelpumpe 211, die das im ersten Kühlmittelteilkreis 210 befindliche Kühlmittel über ein Rückschlagventil 212 umzuwälzen vermag. Dabei kann das Kühlmittel von der ersten Kühlmittelpumpe 211 durch den kühlmittelseitigen Teil des als Kühlmittel/Kältemittel-Wärmeübertrager ausgebildeten Koppelwärmeübertragers 130 strömen. Dem Koppelwärmeübertrager 130 kühlmittelseitig nachgeschaltet ist ein Außenwärmeübertrager 213, der als Luft/Kühlmittel-Wärmeübertrager ausgebildet und von Umgebungsluft durchströmbar ist.

Der zweite Kühlmittelteilkreis 220 umfasst eine zweite Kühlmittelpumpe 221 sowie einen hier als Chiller 222 bezeichneten Wärmerübertrager, der eine thermische Verbindung zwischen dem Kühlmittel und in Figur 1 als weiße Kästen dargestellten, nicht näher bezeichneten elektrischen Antriebskomponenten darstellt. Hierbei kann es sich insbesondere um eine elektrische Traktionsmaschine, eine zugeordnete Leistungselektronik, zugeordnete elektrische Energiespeicher etc. handeln.

Die beiden Teilkreise sind über Schaltventile 230 derart miteinander verbunden, dass sie in einer zweiten Schaltstellung der Schaltventile 230 miteinander verbunden und in einer ersten Schaltstellung der Schaltventile 230 voneinander getrennt sind.

Zur Regelung des Kühlmittelkreises 200 sind verschiedene Messstellen vorgesehen, die in Figur 1 mit "T" markiert sind, um anzudeuten, dass hier die Temperatur des Kühlmittels gemessen und die Messdaten an die Steuereinheit gesendet werden.

Die einzelnen Betriebsmoden sollen nachfolgend näher beschrieben werden.

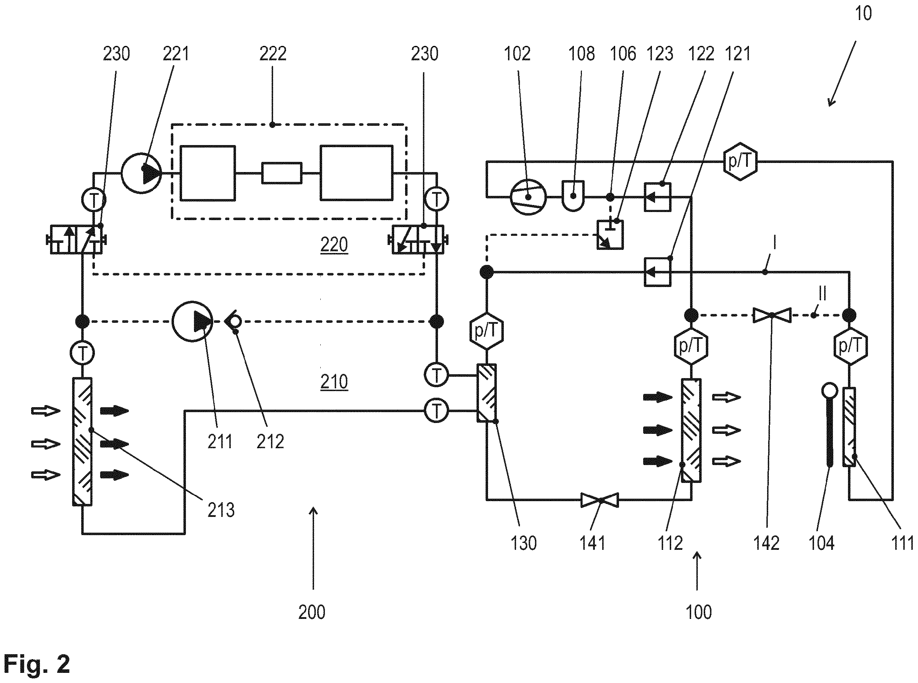

Figur 2 zeigt einen Betriebszustand der Klimatisierungsvorrichtung 10, bei der deren Kältemittelkreis 100 im Kühlbetrieb arbeitet. Das Kältemittel strömt dabei über den ersten Verbindungspfad I vom ersten Innenwärmeübertrager 111 zum zweiten Innenwärmeübertrager 112. Hierzu sind das erste und das zweite Schaltventil 121, 122 auf Durchlass geschaltet, während das dritte Schaltventil 123 sperrt. Ebenso sperrt das zweite Expansionsventil 142. Im Kühlbetrieb wird der erste Wärmeübertrager 111 als Kondensator betrieben. Zur Vermeidung einer im Kühlbetrieb unerwünschten Aufheizung des Luftstroms in die Fahrgastzelle ist die Luftleitklappe 104 geschlossen, kann jedoch, z.B. zum "Gegenheizen" teilweise oder ganz geöffnet werden. Die eigentliche Kondensation/Gaskühlung in diesem Modus erfolgt im Koppelwärmeübertrager 130, der als weiterer Kondensator betrieben wird. Die Kondensationswärme wird hier an den Kühlmittelkreis 200 abgegeben. Hinter dem Koppelwärmeübertrager 130 wird das Kältemittel im ersten Expansionsventil 141 entspannt und in dem als Verdampfer betriebenen zweiten Innenwärmeübertrager 112 verdampft. Hierbei entzieht es dem in die Fahrgastzelle einzuleitenden Luftstrom Wärme, wie dies durch den Schattierungswechsel der Luftpfeile am zweiten Innenwärmeübertrager 112 angedeutet ist.

Bei dem in Figur 2 dargestellten Betriebszustand sind die Schaltventile 230 des Kühlmittelkreises 200 in ihrer zweiten Schaltstellung geschaltet, sodass die beiden Kühlmittelteilkreise 210, 220 miteinander verbunden sind. Aufgrund der Anordnung der ersten Kühlmittelpumpe 211 und insbesondere aufgrund des Rückschlagventils 212 wird die erste Kühlmittelpumpe 211 in dieser Schaltstellung vom Kühlmittel umgangen. Die Umwälzung des Kühlmittels erfolgt allein durch die zweite Kühlmittelpumpe 221 im zweiten Kühlmittelteilkreis 220. Die Kühlmittelpumpe 211 kann in diesem Betriebszustand bevorzugt auch ausgeschaltet sein.

Die über den Koppelwärmeübertrager 130 vom dem Kältemittelkreis in den Kühlmittelkreis 200 aufgenommene Kondensationswärme kann zur Vorheizung der elektrischen Antriebskomponenten über den Chiller 222 folgen und/oder über den Außenwärmeübertrager 213 an die Umgebungsluft abgegeben werden, wie dies durch den Schattierungswechsel der Luftstrompfeile am Außenwärmeübertrager 213 angedeutet ist.

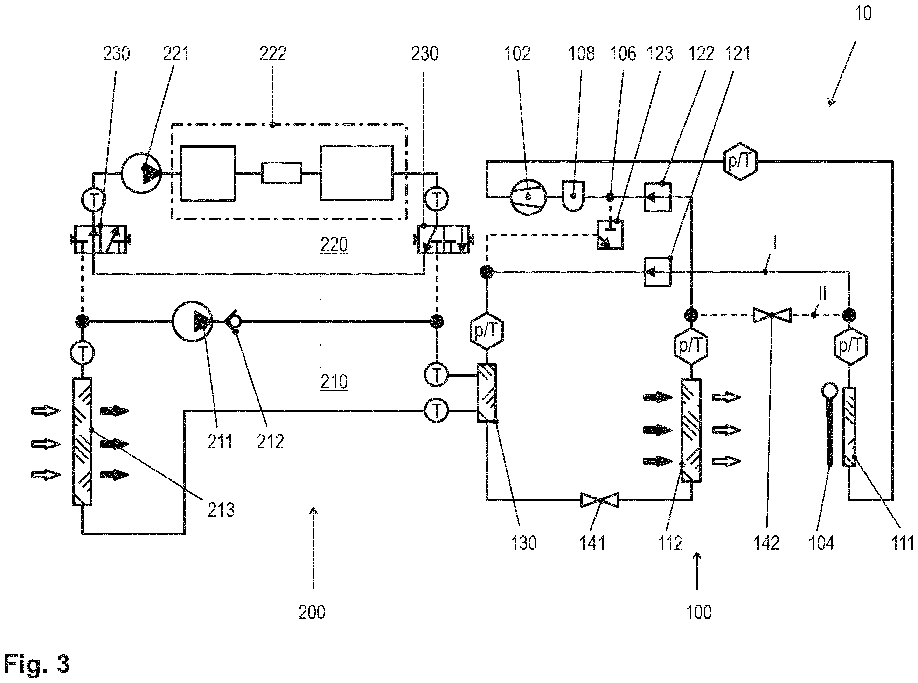

In dem in Figur 3 gezeigten Betriebszustand wird der Kältemittelkreis 100 weiter im Kühlbetrieb betrieben, sodass diesbezüglich auf das oben Gesagte verwiesen werden kann. Die Schaltventile 230 des Kühlmittelkreises sind hier jedoch in ihrer ersten Schaltstellung geschaltet, sodass die Kühlmittelteilkreise 210, 220 getrennt sind. Die Umwälzung des Kühlmittels im ersten Kühlmittelteilkreis 210 erfolgt hierbei durch die erste Kühlmittelpumpe 211. Die im Koppelwärmeübertrager 130 aufgenommene Kondensationswärme aus dem Kältemittelkreis 100 wird über den Außenwärmeübertrager 213 abgeführt.

Die Umwälzung im zweiten Kühlmittelteilkreis 220 erfolgt durch die zweite Kühlmittelpumpe 221. Die Umwälzung dient im Wesentlichen der Vergleichmäßigung der Temperatur der unterschiedlichen elektrischen Antriebskomponenten über den Chiller 222.

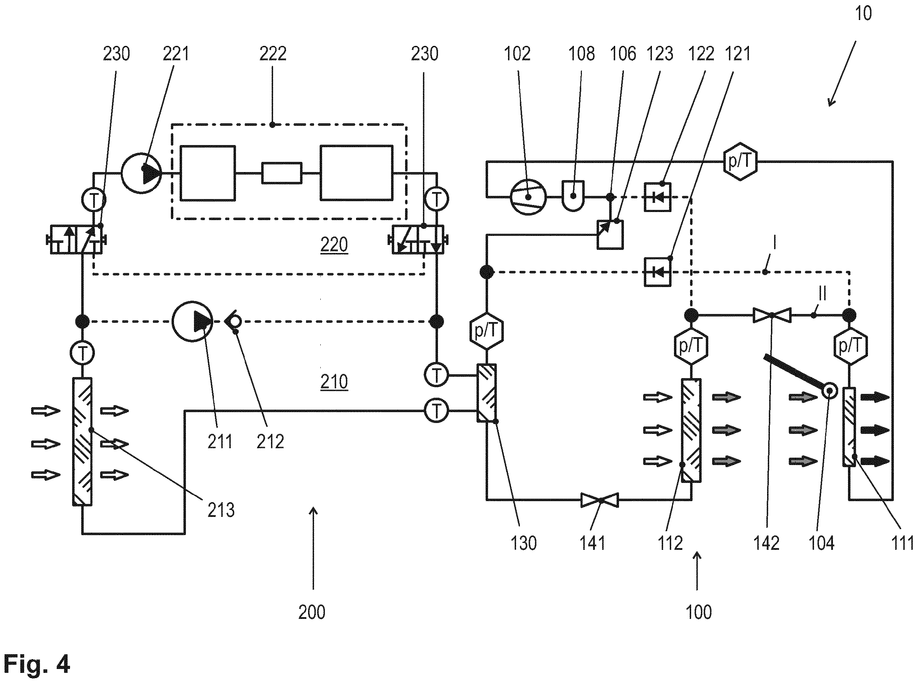

In dem in Figur 4 gezeigten Betriebszustand wird der Kältemittelkreis 100 im Wärmepumpenbetrieb betrieben. Hierbei strömt das Kältemittel über den zweiten Verbindungspfad II vom ersten Innenwärmeübertrager 111 zum zweiten Innenwärmeübertrager 112. Der zweite Verbindungspfad II verbindet beide Innenwärmeübertrager 111, 112 unmittelbar über das zweite Expansionsventil 142. Dieses kann genutzt werden, um eine Druck- und damit eine Temperaturdifferenz zwischen beiden Innenwärmeübertragern 111, 112 einzustellen. Dies ist durch die Schattierungswechsel der Luftströmungspfeile bei den Innenwärmeübertragern 111, 112 angedeutet. Beide Innenwärmeübertrager 111, 112 werden hier als Kondensatoren betrieben, in denen das Kältemittel Kondensationswärme an den in die Fahrgastzelle einzuleitenden Luftstrom abgibt. Die Luftleitklappe 104 ist dabei geöffnet, sodass beide Innenwärmeübertrager 111, 112 zur Lufterwärmung beitragen können. Selbstverständlich kann die Luftleitklappe 104 auch teilweise oder vollständig geschlossen werden, falls eine zweifache Aufheizung des Luftstroms nicht oder nur bedingt erforderlich ist.

Hinter dem zweiten Innenwärmeübertrager 112 wird das Kältemittel im ersten Expansionsventil 141 entspannt, sodass es in dem als Verdampfer betriebenen Koppelwärmeübertrager 130 verdampfen kann. Dabei nimmt das Kältemittel Wärme aus dem über den Koppelwärmeübertrager 130 thermisch gekoppelten Kühlmittelkreis auf.

Diese Wärme kann bei dem in Figur 4 dargestellten Betriebszustand, in dem die Schaltventile 230 des Kühlmittelkreises 200 in ihrer zweiten Schaltstellung geschaltet sind, sodass die Kühlmittelteilkreise 210, 220 verbunden sind, einerseits aus der Abwärme der elektrischen Antriebskomponenten und andererseits aus der Umgebungsluft stammen. Die Abwärme der elektrischen Antriebskomponenten wird über den Chiller 222 in das Kühlmittel eingeleitet. Über den Außenwärmeübertrager 213 kann das Kühlmittel Wärme aus der Umgebung aufnehmen.

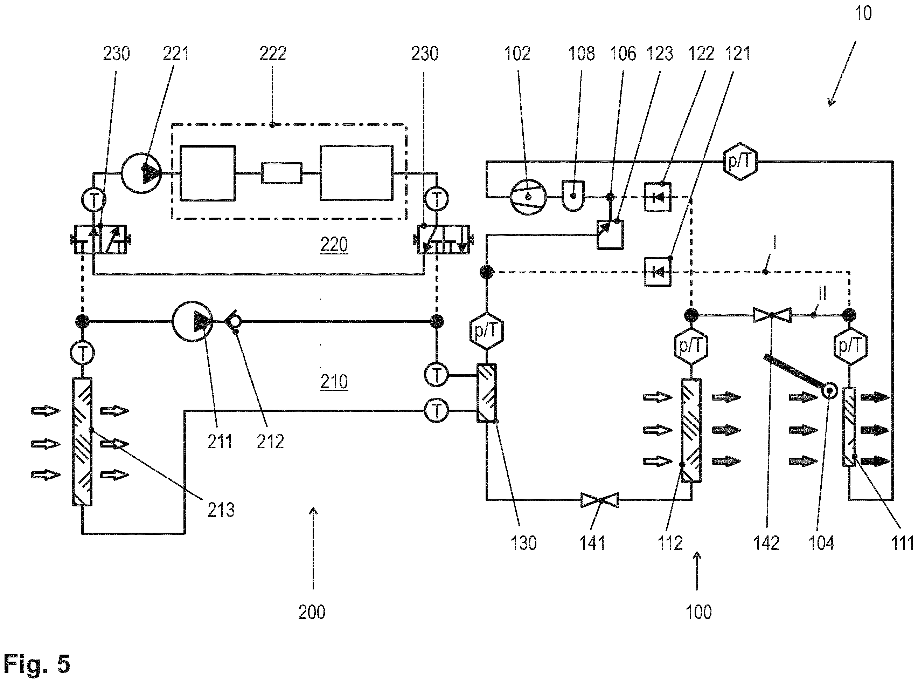

In dem in Figur 5 dargestellten Betriebszustand wird der Kältemittelkreis 100 ebenfalls im Wärmepumpenbetrieb betrieben. Die Schaltventile 230 des Kühlmittelkreises 200 sind jedoch in ihrer ersten Schaltstellung geschaltet, sodass der erste und der zweite Kühlmittelteilkreis 210, 220 voneinander getrennt sind. Die Wärme, die das Kältemittel im Koppelwärmeübertrager 130 aus dem Kühlmittel aufnimmt, kann in dieser Schaltstellung ausschließlich aus der Umgebung stammen. Die Umwälzung des Kühlmittels im zweiten Kühlmittelteilkreis 220 erfolgt im Wesentlichen zur Vergleichmäßigung der Temperatur in den elektrischen Antriebskomponenten.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Rahmen der Ansprüche ein breites Spektrum an Variationsmöglichkeiten an die Hand gegeben.

### Bezugszeichenliste

- 10: Klimatisierungsvorrichtung
- 100: Kältemittelkreis
- 102: Kompressor
- 104: Luftleitklappe
- 106: Mündungspunkt
- 108: Sammler
- 111: erster Innenwärmeübertrager
- 112: zweiter Innenwärmeübertrager
- 121: erstes Schaltventil in 100
- 122: zweites Schaltventil in 100
- 123: drittes Schaltventil in 100
- 130: Koppelwärmeübertrager
- 141: erstes Expansionsventil
- 142: zweites Expansionsventil
- 200: Kühlmittelkreis
- 210: erster Kühlmittelteilkreis
- 211: erste Kühlmittelpumpe
- 212: Rückschlagventil
- 213: Außenwärmeübertrager
- 220: zweiter Kühlmittelteilkreis
- 221: zweite Kühlmittelpumpe
- 222: Chiller
- 230: Schaltventile in 200
- I: erster Verbindungspfad
- II: zweiter Verbindungspfad
- p/T: Druck- und Temperaturmessstelle
- T: Temperaturmessstelle

## Patentansprüche

1. Klimatisierungsvorrichtung für ein Kraftfahrzeug, umfassend
- einen Kältemittelkreis (100) mit
∘ einem Kompressor (102) zum Verdichten von Kältemittel,
∘ einem dem Kompressor (102) in Kältemittel-Strömungsrichtung nachgeschalteten, als Luft-Kältemittel-Wärmeübertrager ausgebildeten und als Kondensator betreibbaren, ersten Innenwärmeübertrager (111) und
∘ einem dem ersten Innenwärmeübertrager (111) in Kältemittel-Strömungsrichtung über ein Expansionsventil (141, 142) nachgeschalteten, als Luft-Kältemittel-Wärmeübertrager ausgebildeten und als Verdampfer betreibbaren, zweiten Innenwärmeübertrager (112) sowie
- einen Kühlmittelkreis (200) mit
∘ einer Kühlmittelpumpe (211, 221) und
∘ einem thermisch mit elektrischen Antriebskomponenten des Kraftfahrzeugs gekoppelten Chiller (222),
wobei der Kühlmittelkreis (200) und der Kältemittelkreis (100) über einen als Kühlmittel/Kältemittel-Wärmeübertrager ausgebildeten Koppelwärmeübertrager (130) thermisch miteinander gekoppelt sind und die aus dem Kühlmittelkreis (200) und dem Kältemittelkreis (100) bestehende Kreisanordnung einen thermisch mit der Umgebungsluft des Kraftfahrzeugs gekoppelten, vom Koppelwärmeübertrager (130) verschiedenen Außenwärmeübertrager (213) aufweist,
wobei der Außenwärmeübertrager (213) als ein in den Kühlmittelkreis (200) integrierter Luft/Kühlmittel-Wärmeübertrager ausgebildet ist,
wobei der Kühlmittelkreis (200) zwei Kühlmittelteilkreise (210, 220) aufweist, nämlich einen ersten Kühlmittelteilkreis (210), umfassend eine erste Kühlmittelpumpe (211), den Außenwärmeübertrager (213) und den kühlmittelseitigen Teil des Koppelwärmeübertragers (130), und einen zweiten Kühlmittelteilkreis (220), umfassend eine zweite Kühlmittelpumpe (221) und den Chiller (222),
und wobei der Kühlmittelkreis (200) Schaltmittel (230) aufweist, mittels derer - in einer ersten Schaltstellung - die Kühlmittelteilkreise (210, 220) voneinander trennbar sind, **dadurch gekennzeichnet,**
**dass** die Kühlmittelteilkreise (210, 220) mittels der Schaltmittel (230) - in einer zweiten Schaltstellung - derart miteinander verbindbar sind, dass der kühlmittelseitige Teil des Koppelwärmeübertragers (130), der Außenwärmeübertrager (213) und der Chiller (222) hintereinander von dem Kühlmittel durchströmt werden.

2. Klimatisierungsvorrichtung nach Anspruch 1,
**dadurch gekennzeichnet,**
**dass** der zweite Innenwärmeübertrager (112) dem ersten Innenwärmeübertrager (111) auf zwei unterschiedlichen, als schaltbare Kältemittel-Strömungswege ausgebildeten Verbindungspfaden (I, II) nachgeschaltet ist, wobei ein erstes Expansionsventil (141) in einen ersten der Verbindungspfade (I) integriert ist und ein zweites Expansionsventil (142) in einen zweiten der Verbindungspfade (II) integriert ist.

3. Verfahren zum Betrieb einer Klimatisierungsvorrichtung nach einem der vorangehenden Ansprüche, wobei der Kältemittelkreis (100) in einem Kühlbetrieb betrieben wird, bei dem im Kompressor (102) verdichtetes Kältemittel zunächst den als Kondensator betriebenen, ersten Innenwärmeübertrager (111) passiert, sodann den als weiteren Kondensator betriebenen Koppelwärmeübertrager (130) passiert, anschließend im ersten Expansionsventil (141) entspannt wird, sodann im als Verdampfer betriebenen, zweiten Innenwärmeübertrager (112) verdampft wird und abschließend zum Kompressor (102) zurückströmt.

4. Verfahren zum Betrieb einer Klimatisierungsvorrichtung nach Anspruch 1 oder 2, wobei der Kältemittelkreis (100) in einem Wärmepumpenbetrieb betrieben wird, bei dem im Kompressor (102) verdichtetes Kältemittel zunächst den als Kondensator betriebenen, ersten Innenwärmeübertrager (111) passiert, sodann das zweite Expansionsventil (142) durchströmt und den als weiteren Kondensator betriebenen, zweiten Innenwärmeübertrager (112) passiert, anschließend im ersten Expansionsventil (141) entspannt wird, sodann im als Verdampfer betriebenen Koppelwärmeübertrager (130) verdampft wird und abschließend zum Kompressor (102) zurückströmt.

5. Verfahren nach Anspruch 4,
**dadurch gekennzeichnet,**
**dass** das Kältemittel im zweiten Expansionsventil (142) eine teilweise Entspannung erfährt.

6. Verfahren nach einem der Ansprüche 3 bis 5,
**dadurch gekennzeichnet,**
**dass** die Schaltmittel (230) in ihrer zweiten Schaltstellung betrieben werden, sodass die Kühlmittelteilkreise (210, 220) miteinander verbunden sind.

7. Verfahren nach Anspruch 6,
**dadurch gekennzeichnet,**
**dass** die Kühlmittelteilkreise (210, 220) unter Umgehung der ersten Kühlmittelpumpe (211) miteinander verbunden sind.

8. Verfahren nach einem der Ansprüche 3 bis 5,
**dadurch gekennzeichnet,**
**dass** die Schaltmittel (230) in ihrer ersten Schaltstellung betrieben werden, sodass die Kühlmittelteilkreise (210, 220) voneinander getrennt sind.

## Claims

1. Air-conditioning device for a motor vehicle, comprising
- a refrigerant circuit (100) with
∘ a compressor (102) for compressing refrigerant,
∘ a first internal heat exchanger (111) that is connected downstream of the compressor (102) in the direction of refrigerant flow, is designed as an air-to-refrigerant heat exchanger and can be operated as a condenser, and
∘ a second internal heat exchanger (112) that is connected downstream of the first internal heat exchanger (111) in the direction of refrigerant flow via an expansion valve (141, 142), is designed as an air-to-refrigerant heat exchanger and can be operated as an evaporator, as well as
- a coolant circuit (200) with
∘ a coolant pump (211, 221) and
∘ a chiller (222) thermally coupled with electrical drive components of the motor vehicle,
wherein the coolant circuit (200) and the refrigerant circuit (100) are thermally coupled with one another via a coupling heat exchanger (130) designed as a coolant-to-refrigerant heat exchanger, and the circuit arrangement consisting of the coolant circuit (200) and the refrigerant circuit (100) has an external heat exchanger (213) that is thermally coupled with the ambient air of the motor vehicle and is different from the coupling heat exchanger (130),
wherein the external heat exchanger (213) is designed as an air-to-coolant heat exchanger integrated into the coolant circuit (200),
wherein the coolant circuit (200) has two coolant sub-circuits (210, 220), specifically a first coolant sub-circuit (210) comprising a first coolant pump (211), the external heat exchanger (213) and the coolant-side part of the coupling heat exchanger (130), and a second coolant sub-circuit (220) comprising a second coolant pump (221) and the chiller (222),
and wherein the coolant circuit (200) has switching devices (230) by means of which the coolant sub-circuits (210, 220) can be separated from one another in a first switching position, **characterized in that**
the coolant sub-circuits (210, 220) can be connected to each other by means of the switching devices (230) in a second switching position in such a manner that the coolant-side part of the coupling heat exchanger (130), the external heat exchanger (213) and the chiller (222) are flowed through one after the other by the coolant.

2. Air-conditioning device according to Claim 1,
**characterized in that**
the second internal heat exchanger (112) is connected downstream of the first internal heat exchanger (111) on two different connecting paths (I, II) designed as switchable refrigerant flow paths, wherein a first expansion valve (141) is integrated into a first of the connecting paths (I) and a second expansion valve (142) is integrated into a second of the connecting paths (II).

3. Method for operating an air-conditioning device according to any one of the preceding claims, wherein the refrigerant circuit (100) is operated in a cooling mode, in which refrigerant compressed in the compressor (102) initially passes through the first internal heat exchanger (111) operated as a condenser, then passes through the coupling heat exchanger (130) operated as a further condenser, is then expanded in the first expansion valve (141), is then evaporated in the second internal heat exchanger (112) operated as an evaporator and finally flows back to the compressor (102).

4. Method for operating an air-conditioning device according to Claim 1 or 2, wherein the refrigerant circuit (100) is operated in a heat pump mode, in which refrigerant compressed in the compressor (102) initially passes through the first internal heat exchanger (111) operated as a condenser, then flows through the second expansion valve (142) and passes through the second internal heat exchanger (112) operated as a further condenser, is then expanded in the first expansion valve (141), is then evaporated in the coupling heat exchanger (130) operated as an evaporator and finally flows back to the compressor (102).

5. Method according to Claim 4,
**characterized in that**
the refrigerant undergoes a partial expansion in the second expansion valve (142).

6. Method according to any one of Claims 3 to 5,
**characterized in that**
the switching devices (230) are operated in their second switching position so that the coolant sub-circuits (210, 220) are connected to each other.

7. Method according to Claim 6,
**characterized in that**
the coolant sub-circuits (210, 220) are connected to each other, bypassing the first coolant pump (211).

8. Method according to any one of Claims 3 to 5,
**characterized in that**
the switching devices (230) are operated in their first switching position so that the coolant sub-circuits (210, 220) are separated from each other.

## Revendications

1. Dispositif de climatisation pour un véhicule automobile, comprenant
- un circuit de réfrigérant (100) comprenant
∘ un compresseur (102) pour condenser le réfrigérant
∘ un premier échangeur de chaleur interne (111) connecté en aval du compresseur (102) dans la direction d'écoulement du réfrigérant, conçu comme un échangeur de chaleur air-réfrigérant et utilisable comme un condensateur et
∘ un deuxième échangeur de chaleur interne (112) connecté en aval du premier échangeur de chaleur interne (111) dans la direction d'écoulement du réfrigérant par le biais d'une soupape de détente (141, 142), conçu comme un échangeur de chaleur air-réfrigérant et utilisable comme un évaporateur et
- un circuit de liquide de refroidissement (200) comprenant
∘ une pompe de liquide de refroidissement (211, 221) et
∘ un refroidisseur (222) couplé thermiquement à des composants d'entraînement électrique du véhicule automobile,
le circuit de liquide de refroidissement (200) et le circuit de réfrigérant (100) étant thermiquement couplés l'un à l'autre par le biais d'un échangeur de chaleur de couplage (130) conçu comme un échangeur de chaleur liquide de refroidissement/réfrigérant et l'assemblage de circuits composé du circuit de liquide de refroidissement (200) et du circuit de réfrigérant (100) présentant un échangeur de chaleur externe (213) couplé thermiquement avec l'air ambiant du véhicule automobile, différent de l'échangeur de chaleur de couplage (130),
l'échangeur de chaleur externe (213) étant conçu comme un échangeur de chaleur air/liquide de refroidissement intégré dans le circuit de liquide de refroidissement,
le circuit de liquide de refroidissement (200) présentant deux circuits partiels de liquide de refroidissement (210, 220), à savoir un premier circuit partiel de liquide de refroidissement (210), comprenant une première pompe de liquide de refroidissement (211), l'échangeur de chaleur externe (213) et la partie côté liquide de refroidissement de l'échangeur de chaleur de couplage (130) et un deuxième circuit partiel de liquide de refroidissement (220), comprenant une deuxième pompe de liquide de refroidissement (221) et le refroidisseur (222),
et le circuit de liquide de refroidissement (200) présentant un moyen de commutation (230), au moyen duquel - dans une première position de commutation - les circuits partiels de liquide de refroidissement (210, 220) peuvent être séparés l'un de l'autre, **caractérisé en ce que**
les circuits partiels de liquide de refroidissement (210, 220) peuvent être raccordés l'un à l'autre au moyen du moyen de commutation (230) - dans une deuxième position de commutation - de telle façon que la partie côté liquide de refroidissement de l'échangeur de chaleur de couplage (130), l'échangeur de chaleur externe (213) et le refroidisseur (222) sont traversé l'un derrière l'autre par le liquide de refroidissement.

2. Dispositif de climatisation selon la revendication 1,
**caractérisé en ce que**
le deuxième échangeur de chaleur interne (112) est connecté en aval du premier échangeur de chaleur interne (111) sur deux trajets de raccordement différents (I, II), conçus comme des voies d'écoulement de réfrigérant commutables, une première soupape de détente (141) étant intégrée dans un premier des trajets de raccordement (I) et une deuxième soupape de détente (142) étant intégrée dans un deuxième des trajets de raccordement (II).

3. Procédé d'utilisation d'un dispositif de climatisation selon une quelconque des revendications précédentes, dans lequel le circuit de réfrigérant (100) est utilisé dans un mode de refroidissement, dans lequel le réfrigérant condensé dans le compresseur (102) passe d'abord le premier échangeur de chaleur interne (111) utilisé comme condensateur, puis passe l'échangeur de chaleur de couplage (130) utilisé comme autre condensateur, est ensuite détendu dans la première soupape de détente (141), puis évaporé dans le deuxième échangeur de chaleur interne (112) utilisé comme évaporateur et ensuite revient vers le compresseur (102).

4. Procédé d'utilisation d'un dispositif de climatisation selon la revendication 1 ou 2, dans lequel le circuit de réfrigérant (100) est utilisé dans un mode de pompe à chaleur, dans lequel le réfrigérant condensé dans le compresseur (102) passe d'abord le premier échangeur de chaleur interne (111) utilisé comme condensateur, puis traverse la deuxième soupape de détente (142) et passe le deuxième échangeur de chaleur interne (112) utilisé comme autre condensateur, est ensuite détendu dans la première soupape de détente (141), puis évaporé dans l'échangeur de chaleur de couplage (130) utilisé comme évaporateur et ensuite revient vers le compresseur (102).

5. Procédé selon la revendication 4,
**caractérisé en ce que**
le réfrigérant subit une détente partielle dans la deuxième soupape de détente (142).

6. Procédé selon l'une quelconque des revendications 3 à 5,
**caractérisé en ce que**
le moyen de commutation (230) est utilisé dans sa deuxième position de commutation, de manière à raccorder les circuits partiels de liquide de refroidissement (210, 220) l'un à l'autre.

7. Procédé selon la revendication 6,
**caractérisé en ce que**
les circuits partiels de liquide de refroidissement (210, 220) sont raccordés l'un à l'autre en contournant la première pompe de liquide de refroidissement (211).

8. Procédé selon l'une quelconque des revendications 3 à 5,
**caractérisé en ce que**
le moyen de commutation (230) est utilisé dans sa première position de commutation, de manière à séparer les circuits partiels de liquide de refroidissement (210, 220) l'un de l'autre.
